# EUROPÄISCHE PATENTSCHRIFT

(11) **EP 2 652 478 B1**
(45) Veröffentlichungstag und Bekanntmachung des Hinweises auf die Patenterteilung: **08.10.2014**
(21) Anmeldenummer: 11837294.5
(22) Anmeldetag: 07.12.2011
(51) Int. Cl.: G01N 17/02, B05B 17/06, B05B 7/00, B05B 12/08, H01M 4/04, B05B 13/02

(54) **VERFAHREN UND VORRICHTUNG ZUR BILDUNG EINES ELEKTROLYTFILMES AUF EINER ELEKTRODENOBERFLÄCHE**
METHOD AND DEVICE FOR FORMING AN ELECTROLYTE FILM ON AN ELECTRODE SURFACE
PROCÉDÉ ET DISPOSITIF PERMETTANT DE FORMER UN FILM ÉLECTROLYTIQUE SUR LA SURFACE D'UNE ÉLECTRODE

(30) Priorität: 17.12.2010 DE 102010055042
(43) Veröffentlichungstag der Anmeldung: 23.10.2013
(73) Patentinhaber: Airbus Operations GmbH, 21129 Hamburg (DE)
(72) Erfinder: HACK, Theo, 85635 München (DE); PALANI, Siva, 28359 Bremen (DE)
(74) Vertreter: Maiwald Patentanwalts GmbH
(86) Internationale Anmeldenummer: PCT/DE2011/002083
(87) Internationale Veröffentlichungsnummer: WO 2012/079562

(56) Entgegenhaltungen:
- GB-A- 1 362 803
- US-A- 4 290 384
- US-A- 5 166 000
- O OKADA ET AL: "Behavior of liquid films and droplets in the non-equilibrium region of a downward annular mist flow (comparison of porous and central nozzle mixing methods)", INTERNATIONAL JOURNAL OF MULTIPHASE FLOW, Bd. 19, Nr. 1, 1. Februar 1993 (1993-02-01), Seiten 79-89, XP55032209, ISSN: 0301-9322, DOI: 10.1016/0301-9322(93)90024-O
- TOORU TSURU ET AL: "Electrochemical studies on corrosion under a water film", MATERIALS SCIENCE AND ENGINEERING A, Bd. 198, Nr. 1-2, 1. Juli 1995 (1995-07-01), Seiten 161-168, XP55032212, ISSN: 0921-5093, DOI: 10.1016/0921-5093(95)80071-2

## Beschreibung

Die Erfindung betrifft ein Verfahren und eine Vorrichtung zur Bildung eines Elektrolytfilmes auf einer Elektrodenoberfläche. Ein solches Verfahren bzw. eine solche Vorrichtung dient dazu, die galvanische Korrosion zwischen unterschiedlichen metallischen Werkstoffen unter unterschiedlichen Bedingungen zu untersuchen.

Atmosphärische Korrosionsphänomene unter dünnen Elektrolytfilmen treten vor allem im Inneren von Luftfahrzeugen während bestimmter Flugphasen oder nach der Landung auf. Dabei liegt die Außenhauttemperatur der Rumpfstruktur im Bereich von bis zu ca. -55°C, so dass sich die der Umgebung ausgesetzten Bauteile entsprechend abkühlen und sich auf deren Strukturinnenseite Kondensate und Eis bilden, mit der Folge, dass miteinander elektrisch leitend verbundene unterschiedliche metallische Werkstoffe während des Vorliegens einer wässrigen Phase galvanischer Korrosion unterliegen.

Bisher wird die galvanische Korrosion dadurch untersucht, dass z.B. das zu untersuchende Substrat auf eine Temperatur unterhalb des Taupunktes des Elektrolyten abgekühlt wird, so dass sich auf dem Substrat ein im Wesentlichen aus Wasser bestehender Elektrolytfilm ausbildet. Nachteilig dabei ist, dass die Filmbildung nicht im Hinblick auf die Elektrolytleitfähigkeit und -zusammensetzung gesteuert werden kann. Nachdem sich der Elektrolytfilm gebildet hat, ergibt sich eine unkontrollierbare und nicht zu verhindernde Verdunstung des Filmes, so dass die Einstellung der Filmdicke sehr empfindlich ist gegenüber Änderungen der Umgebungsbedingungen wie Temperatur und relative Luftfeuchte. Das Kondensationsverhalten und die Filmbildung sind eine Funktion der thermischen Leitfähigkeit des Substrates oder der Substratkombination sowie der Oberfächenbeschaffenheit und daher ist es schwierig, einen gleichförmigen Film auf einem aus verschiedenen Materialien bestehenden Substrat auszubilden.

In einer alternativen Methode wird der Elektrolytfilm auf dem Substrat dadurch gebildet, dass mittels einer Pipette eine für eine gewünschte Schichtdicke erforderliche definierte Elektrolytmenge aufgebracht wird, die sich mehr oder weniger gleichmäßig auf der Substratoberfläche verteilt. Dabei kann die Gleichförmigkeit der Schicht nur angenommen werden. Ferner wird es - wie bei obigem Verfahren - unkontrollierbare Verdunstungseffekte geben.

GB 1 362 803 A beschreibt eine Vorrichtung zur Erzeugung dünner metallischer Filme, welche einen Aerosolerzeuger, eine Kammer und eine Trägergasleitung zwischen dem Aerosolerzeuger und der Kammer aufweist.

Hiervor ausgehend liegt der Erfindung die Aufgabe zugrunde, ein gattungsgemäßes Verfahren und eine Vorrichtung bereitzustellen, die es ermöglicht, auf einem Substrat einen reproduzierbaren Elektrolytfilm mit einer vorgebbaren Filmdicke auszubilden und dies unabhängig vom verwendeten Substratmaterial und der Elektrolytzusammensetzung.

Erfindungsgemäß wird diese Aufgabe durch die in den unabhängigen Ansprüchen enthaltenden Merkmale gelöst. Vorteilhafte Weiterbildungen der Erfindung ergeben sich aus den Unteransprüchen. Die Erfindung ermöglicht genaue und reproduzierbare parametrische Untersuchungen von galvanischer Korrosion, insbesondere im Hinblick auf die Filmdicke in Abhängigkeit von zu untersuchenden Materialien und Elektrolyten. Dabei ist die Filmbildung im Gegensatz zum Stand der Technik beinahe unabhängig von der thermischen Leitfähigkeit des Substrates und der Zusammensetzung des Elektrolyten.

Die Erfindung ergibt sich aus den Merkmalen der unabhängigen Ansprüche. Vorteilhafte Weiterbildungen und Ausgestaltungen sind Gegenstand der abhängigen Ansprüche.

Das erfindungsgemäße Verfahren ist dadurch gekennzeichnet, dass
(a) ein flüssiger Elektrolyt in einen Hohlraum zur Bildung eines Elektrolytnebels zerstäubt wird;
(b) der Elektrolytnebel aus dem Hohlraum über eine Öffnung austritt und anschließend über eine hinter der Öffnung nach schräg unten ausgerichtete Elektrodenoberfläche strömt,
(c) wodurch sich auf der Elektrodenoberfläche ein Elektrolytfilm ausbildet,
(d) wobei die Dicke des Elektrolytfilms über den Neigungswinkel der Elektrodenoberfläche eingestellt wird.

Die erfindungsgemäße Vorrichtung ist dadurch gekennzeichnet, dass diese einen Elektrolytbehälter umfasst, der über eine Zerstäubungseinrichtung mit einer Nebelkammer zur Aufnahme von zerstäubtem Elektrolyten kommuniziert und die Nebelkammer einen Nebelauslass umfasst, ferner eine Halterung zur Fixierung der Elektrodenoberfläche in einem vorgebbaren Neigungswinkel vorgesehen ist, so dass durch den Nebelauslass austretbarer Elektrolytnebel über die Elektrodenoberfläche zur Bildung eines Elektrolytfilmes strömt.

Gemäß einer vorteilhaften Weiterbildung der Erfindung wird der Elektrolyt mit einem nichtionischen Tensid, vorzugsweise 0,05 bis 1 vol.% Tensid gemischt. Dadurch lässt sich die Oberflächenspannung zwischen Flüssigkeit und der Oberfläche reduzieren, wodurch die Benetzbarkeit des Substrates und damit die Bildung eines homogenen Films verbessert wird. Vorzugsweise wird als Tensid Triton X114 verwendet.

Gemäß einer vorteilhaften Weiterbildung der Erfindung ist die Zerstäubungseinrichtung als Piezozerstäuber ausgebildet. Piezokeramische Ultraschallzerstäuber zeichnen sich durch geringen Energiebedarf, niedrige Unterhaltskosten und lange Lebensdauer sowie insbesondere durch individuell einstellbare homogene Tröpfchenverteilung aus.

Gemäß einer vorteilhaften Weiterbildung der Erfindung ist die Halterung in einem Winkel zur Horizontalen neigungsverstellbar. Dadurch lässt sich die Strömungsgeschwindigkeit des Elektrolyten über das Substrat und damit die Filmdicke einstellen.

Gemäß einer vorteilhaften Weiterbildung der Erfindung weist der Nebelauslass einen verstellbaren Öffnungsquerschnitt auf. Damit lässt sich die Menge des ausströmenden Elektrolyten und damit in Verbindung mit der Neigung des Substrates die Filmdicke einstellen.

Gemäß einer vorteilhaften Weiterbildung der Erfindung ist diese in einer geschlossenen Kammer untergebracht. Dadurch lassen sich Einflüsse von Außentemperatur und/oder Luftfeuchtigkeit auf die Filmdicke bzw. das Korrosionsverhalten minimieren.

Gemäß einer vorteilhaften Weiterbildung der Erfindung umfasst diese eine optische Erfassungseinrichtung, mittels der die Filmdicke des Elektrolytfilmes messbar ist. Auf diese Weise lässt sich in Verbindung mit einer Regeleinrichtung, vorzugsweise einem Computer, über die Öffnung des Nebelauslasses und/oder die Neigung des Substrates die Filmdicke automatisiert regeln bzw. nachregeln.

Gemäß einer vorteilhaften Weiterbildung der Erfindung ist die optische Erfassungseinrichtung hinsichtlich des Erfassungspunktes verstellbar, um die Filmdicke an verschiedenen Stellen der Elektrodenoberfläche zu erfassen. Dadurch lässt sich sicherstellen, dass auch über dem gesamten Substrat, insbesondere an den beiden Materialien annähernd die gleiche Filmdicke vorliegt bzw. die vorliegende Filmdickenverteilung bekannt ist.

Gemäß einer vorteilhaften Weiterbildung der Erfindung ist die optische Erfassungseinrichtung als Spektroskop oder Spektrometer ausgebildet, das die Filmdicke mittels optischer Spektroskopie misst.

Gemäß einer vorteilhaften Weiterbildung der Erfindung ist in der Nebelkammer ein regelbarer Ventilator angeordnet, der die Menge des über den Nebelauslass austretenden Elektrolytnebels steuert. Dadurch lässt sich die Menge des austretenden Nebels besser steuern.

Gemäß einer vorteilhaften Weiterbildung der Erfindung ist die vorbeschriebene Vorrichtung Bestandteil einer Einrichtung zur Untersuchung galvanischer Korrosion, wobei das Substrat zwei oder mehr koplanar angeordnete Flächen unterschiedlicher Materialien umfasst, die jeweils Elektroden bilden und die Elektroden mittels Verbindungsleitungen mit einer Strommesseinrichtung verbindbar sind. So können die jeweiligen Ströme zwischen den Elektroden gemessen werden. Die Verbindungsleitungen können auch direkt miteinander verbunden werden, wenn die Strommessung nicht erforderlich ist, da eine galvanische Korrosion zwischen den Elektroden eine leitende Verbindung zwischen diesen erfordert.

Weitere Vorteile, Merkmale und Einzelheiten ergeben sich aus der nachfolgenden Beschreibung, in der - unter Bezug auf die Zeichnung - ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen. Gleiche, ähnliche und/oder funktionsgleiche Teile sind mit gleichen Bezugszeichen versehen.

Dabei zeigt
- Figur 1:: eine Vorrichtung gemäß der Erfindung
- Figur 2:: ein Substrat mit 2 Elektroden.

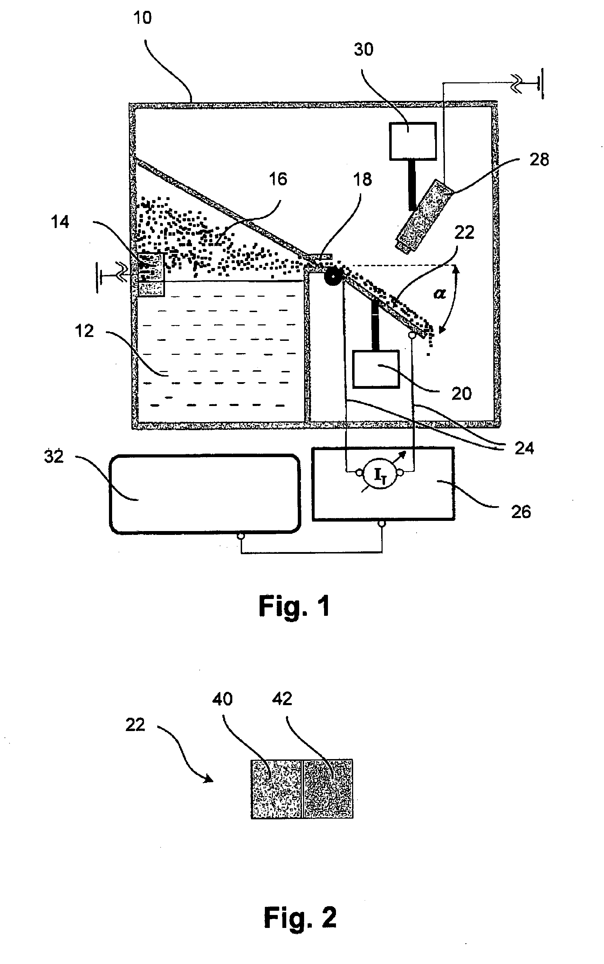

Die Figur 1 zeigt eine luftdicht verschließbare Kammer 10, in dem ein Elektrolytbehälter 12 angeordnet ist, in dem sich ein Elektrolyt, beispielsweise 0,1 mol/l Natriumchlorid befindet. Ein Zerstäuber 14, vorzugsweise als Piezozerstäuber ausgebildet, dient dazu, Elektrolyten aus dem Elektrolytbehälter 12 in Mikrotröpfchen in einer Größe von ca. 0,5 - 6 µm zu zerstäuben, die sich in der Nebelkammer 16 sammeln. Die Nebelkammer 16 weist einen Nebelauslass 18 auf, der vorzugsweise einen verstellbaren Querschnitt aufweist, um die Menge des austretenden Elektrolytnebels zu steuern.

Ferner ist eine Substrathalterung 20 vorgesehen, auf der das Substrat 22 befestigt wird, wobei der Neigungswinkel α des Substrates zur Horizontalen veränderbar ist. Das Substrat 22 ist in Figur 2 näher beschrieben und umfasst mindestens zwei koplanare Flächen unterschiedlicher Materialien, die beide als Elektroden fungieren. Alle Elektroden sind mittels Verbindungsleitungen 24 mit einer Strommesseinrichtung 26, vorzugsweise einem Amperemeter, verbunden. Die Strommesseinrichtung 26 kann auch Schalteinrichtungen umfassen, um eine direkte Verbindung zwischen Elektroden zu bewirken.

Ferner enthält die Kammer 10 eine optische Erfassungseinrichtung 28, vorzugsweise ein Spektroskop oder Spektrometer, die über eine Verstelleinrichtung 30 verstellbar ist, um unterschiedliche Stellen auf dem Substrat 22 zu erfassen.

Die Strommesseinrichtung 26 ist mit einer Regeleinrichtung 32 gekoppelt, um die Anordnung zu steuern bzw. die gemessenen Ströme zu erfassen und auszuwerten. Die optische Erfassungseinrichtung 28, sowie deren Verstelleinrichtung 30, der Zerstäuber 14, die Substrathalterung 20 und die Querschnittsverstellung des Nebelauslasses 18 sind über nicht dargestellte Leitungen ebenfalls mit der Regeleinrichtung 32 gekoppelt.

In Figur 2 ist eine Ansicht des Substrates 22 dargestellt, das aus zwei koplanaren unterschiedlichen nebeneinander angeordneten Elektroden 40, 42 besteht, beispielsweise kohlefaserverstärkter Kunststoff und Aluminium. Das Substrat 22 kann auch aus mehr als zwei Elektroden bestehen, insbesondere drei oder vier, die dann jeweils über Verbindungsleitungen 24 mit der Strommesseinrichtung 26 verbunden sind.

Im Betrieb wird ein zu untersuchender Elektrolyt vorbereitet und in den Elektrolytbehälter 12 eingefüllt. Dem Elektrolyten wird vorzugsweise ein nichtionisches Tensid zugemengt, um die Oberflächenspannung zwischen der Flüssigkeit und der zu benetzenden Oberfläche zu verringern und damit die Benetzbarkeit des Substrates zu vereinfachen und die Bildung einer möglichst homogenen Elektrolytschicht zu ermöglichen. Mittels des Zerstäubers 14 wird der Elektrolyt in die Nebelkammer 16 zerstäubt. Der Elektrolytnebel strömt aus der Nebelkammer 16 durch den Nebelauslass 18 und anschließend über das geneigte Substrat 22, wobei die Strömungsmenge durch Anpassung des Offnungsquerschnitts des Nebelauslasses 18 eingestellt wird. Der kontinuierliche Nebelstrom über das geneigte Substrat 22 erzeugt einen nach einiger Zeit konstanten Elektrolytfilm auf dem Substrat von durch die Neigung des Substrates 22 vorgegebener Filmdicke. Dann befindet sich der Elektrolyt im Gleichgewichtszustand mit dem kontinuierlich fließenden Nebelstrom, der damit entgegen dem Stand der Technik nicht der Umgebungsatmosphäre ausgesetzt ist. Damit kann eine Verdunstung des Elektrolytfilmes verhindert werden. Durch Veränderung des Substrat-Neigungswinkels kann die Filmdicke in weiten Bereichen zwischen 0 und 90 µm eingestellt werden. Dabei wird die Filmdicke mittels des Spektrometers 28 bestimmt, das mittels der Einstelleinrichtung 30 verstellt wird, um die Filmdicke an verschiedenen Stellen des Substrates 22 zu bestimmen. Falls diese abweicht von den Sollwerten kann mittels der Regeleinrichtung 32 der Querschnitt des Nebelauslasses 18 oder der Neigungswinkel des Substrates 22 verändert werden. Der Neigungswinkel α wird vorzugsweise in einem Bereich von 0° bis 90° liegen.

Mittels der Kammer 10 werden in deren Inneren geeignete, konstante Verhältnisse (Temperatur, Konvektion) sichergestellt, um die Genauigkeit und Reproduzierbarkeit des Versuchsablaufes zu gewährleisten.

## Patentansprüche

1. Verfahren zur Bildung eines Elektrolytfilmes auf einer Elektrodenoberfläche, bei dem
(a) der flüssige Elektrolyt in einen Hohlraum (16) zur Bildung eines Elektrolytnebels zerstäubt wird;
(b) der Elektrolytnebel aus dem Hohlraum (16) über eine Öffnung (18) austritt und anschließend über die hinter der Öffnung (18) ausgerichtete Elektrodenoberfläche (22) strömt,
(c) wodurch sich auf der Elektrodenoberfläche (22) ein Elektrolytfilm ausbildet,
(d) **dadurch gekennzeichnet, dass** die Elektrodenoberfläche nach schräg unten ausgerichtet ist, und die Dicke des Elektrolytfilms über den Neigungswinkel der Elektrodenoberfläche (22) eingestellt wird.

2. Verfahren nach Anspruch 1, **dadurch gekennzeichnet, dass** der Elektrolyt mit einem nichtionischen Tensid, vorzugsweise 0,1 bis 1 Vol.% Tensid gemischt wird.

3. Vorrichtung zur Bildung eines Elektrolytfilmes auf einer Elektrodenoberfläche, wobei diese einen Elektrolytbehälter (12) umfasst, der über eine Zerstäubungseinrichtung (14) mit einer Nebelkammer (16) zur Aufnahme von zerstäubten Elektrolyten kommuniziert und die Nebelkammer (16) einen Nebelauslass (18) umfasst, **dadurch gekennzeichnet, dass** ferner eine Halterung (20) zur Fixierung der Elektrodenoberfläche (22) in einem vorgebbaren Neigungswinkel vorgesehen ist, so dass durch den Nebelauslass (18) austretbarer Elektrolytnebel über die Elektrodenoberfläche (22) zur Bildung eines Elektrolytfilmes strömt.

4. Vorrichtung nach Anspruch 3, **dadurch gekennzeichnet,dass** die Zerstäubungseinrichtung (14) als Piezozerstäuber ausgebildet ist.

5. Vorrichtung nach Anspruch 3, **dadurch gekennzeichnet, dass** die Halterung (20) in einem Winkel zur Horizontalen zwischen 0° und 90° neigungsverstellbar ist.

6. Vorrichtung nach Anspruch 3, **dadurch gekennzeichnet,dass** der Nebelauslass (18) einen veränderbaren Öffnungsquerschnitt aufweist.

7. Vorrichtung nach Anspruch 3, **dadurch gekennzeichnet, dass** diese in einer geschlossenen Kammer (10) untergebracht ist.

8. Vorrichtung nach Anspruch 3, **dadurch gekennzeichnet, dass** die eine optische Erfassungseinrichtung (28) umfasst, mittels der die Filmdicke des Elektrolytfilmes messbar ist.

9. Vorrichtung nach Anspruch 8, **dadurch gekennzeichnet,dass** die optische Erfassungseinrichtung (28) verstellbr ist, um die Filmdicke an verschiedenen Stellen der Elektrodenoberfläche (22) zu erfassen.

10. Vorrichtung nach Anspruch 8, **dadurch gekennzeichnet, dass** die optische Erfassungseinrichtung (28) als Spektroskop oder Spektrometer ausgebildet ist, das die Filmdicke mittels optischer Spektroskopie misst.

11. Vorrichtung nach einem der Ansprüche 3 bis 10, **dadurch gekennzeichnet, dass** in der Nebelkammer (16) ein regelbarer Ventilator angeordnet ist, der die Menge des über den Nebelauslass (18) austretenden Elektrolytnebels steuert.

12. Einrichtung zur Untersuchung galvanischer Korrosion, umfassend die Vorrichtung nach einem der Ansprüche 3 bis 11, wobei das Substrat zwei oder mehr koplanar angeordnete Flächen (40, 42) unterschiedlicher Materialien umfasst, die jeweils Elektroden bilden, wobei die Elektroden mittels Verbindungsleitungen (24) mit einer Strommesseinrichtung (26) verbindbar sind.

## Claims

1. A method for forming an electrolyte film on an electrode surface in which
a) the liquid electrolyte is sprayed into a cavity (16) in order to form an electrolyte mist;
b) the electrolyte mist exits the cavity (16) through an opening (18) and subsequently flows across the electrolyte surface (22) which lies behind the opening (18),
c) whereby an electrolyte film is formed on the electrode surface (22)
d) **characterized in that** the electrolyte surface is directed downward at an angle and the thickness of the electrolyte film is set by means of the angle of inclination of the electrode surface (22).

2. The method according to claim 1, **characterized in that** the electrolyte is mixed with a nonionic surfactant, preferably 0,1 to 1 vol.%.

3. A device for forming an electrolyte film on an electrode surface, comprising the electrolyte tank (12), which communicates with a mist chamber (16) by means of an atomizer (14) for receiving sprayed electrolyte, and comprises the mist chamber (16) and the mist outlet (18), **characterized in that** a holder (20) for fixing the electrode surface at a specifiable angle is provided, so that electrolyte mist, which can exit through the mist outlet (18), flows across the electrode surface (22) in order to form an electrolyte film.

4. The device according to claim 3, **characterized in that** the atomizer (14) is designed as a piezo-atomizer.

5. The device according to claim 3, **characterized in that** the inclination of the holder (20) is adjustable at an angle between 0° and 90° to the horizontal.

6. The device according to claim 3, **characterized in that** the mist outlet (18) comprises an adjustable opening cross section.

7. The device according to claim 3, **characterized in that** it is housed in a closed chamber (10).

8. The device according to claim 3, **characterized in that** it comprises an optical acquisition device (28) by means of which the film thickness of the electrolyte film can be measured.

9. The device according to claim 8, **characterized in that** the optical acquisition device (28) is adjustable in order to acquire the film thickness at various locations of the electrode surface.

10. The device according to claim 8, **characterized in that** the optical acquisition device (28) is designed as spectroscope or spectrometer that measures the optical thickness by means of optical spectroscopy.

11. The device according to any one of claims 3 to 10, **characterized in that** a controllable fan which controls the quantity of the electrolyte mist that exits by way of the mist outlet (18) is arranged in the mist chamber (16).

12. An apparatus for investigating galvanic corrosion, comprising the device of any one of claims 3 to 11, wherein the substrate comprises two or more co-planar surfaces (40,42) of different materials, which form electrodes and wherein the electrodes can be connected to a current-measuring device (26) by connecting lines (24).

## Revendications

1. Procédé de formation d'un film électrolytique sur une surface d'électrode, selon lequel
(a) l'électrolyte liquide est vaporisé dans un espace creux (16) pour former un brouillard électrolytique ;
(b) le brouillard électrolytique s'échappe de l'espace creux (16) au travers d'une ouverture (18), puis s'écoule sur la surface d'électrode (22) orientée en arrière de l'ouverture (18) ;
(c) un film électrolytique se forme de ce fait sur la surface d'électrode (22) ;
(d) **caractérisé en ce que** la surface d'électrodes est orientée en oblique vers le bas, et l'épaisseur du film électrolytique est réglée par l'intermédiaire de l'angle d'inclinaison de la surface d'électrode (22).

2. Procédé selon la revendication 1, **caractérisé en ce que** l'électrolyte est mélangé à un agent tensioactif non ionique, de préférence à 0,1 à 1% volume d'agent tensioactif.

3. Dispositif destiné à former un film électrolytique sur une surface d'électrode, ce dispositif comportant un réservoir d'électrolyte (12), qui communique par l'intermédiaire d'un dispositif de vaporisation (14) avec une chambre à brouillard (16) pour recevoir des électrolytes vaporisés, et la chambre à brouillard (16) comporte une décharge de brouillard (18), **caractérisé en ce qu'**il est prévu en outre une fixation (20) pour fixer la surface d'électrode (22) sous un angle d'inclinaison prédéfinissable, de sorte que du brouillard électrolytique, pouvant s'échapper par la décharge de brouillard (18), s'écoule sur la surface d'électrode (22) pour former un film électrolytique.

4. Dispositif selon la revendication 3, **caractérisé en ce que** le dispositif de vaporisation (14) est un vaporisateur piézoélectrique.

5. Dispositif selon la revendication 3, **caractérisé en ce que** la fixation (20) est réglable en inclinaison sous un angle par rapport à l'horizontale compris entre 0° et 90°.

6. Dispositif selon la revendication 3, **caractérisé en ce que** la décharge de brouillard (18) présente une section transversale d'ouverture modifiable.

7. Dispositif selon la revendication 3, **caractérisé en ce que** ce dernier est logé dans un compartiment fermé (10).

8. Dispositif selon la revendication 3, **caractérisé en ce que** ce dernier comporte un dispositif de détection optique (28), au moyen duquel l'épaisseur du film électrolytique est mesurable.

9. Dispositif selon la revendication 8, **caractérisé en ce que** le dispositif de détection optique (28) est ajustable, afin de détecter l'épaisseur du film en différents endroits de la surface d'électrode (22).

10. Dispositif selon la revendication 8, **caractérisé en ce que** le dispositif de détection optique (28) est réalisé sous forme de spectroscope ou de spectromètre, qui mesure l'épaisseur du film par spectroscopie optique.

11. Dispositif selon l'une des revendications 3 à 10, **caractérisé en ce qu'**un ventilateur réglable est disposé dans la chambre à brouillard (16), lequel ventilateur contrôle la quantité du brouillard électrolytique s'échappant au travers de la décharge de brouillard (18).

12. Appareillage pour l'analyse de corrosion galvanique, comprenant le dispositif selon l'une des revendications 3 à 11, le substrat comportant deux surfaces, ou plus (40, 42), coplanaires en matériaux différents, qui forment respectivement des électrodes, les électrodes pouvant être reliées au moyen de lignes de jonction (24) à un dispositif de mesure du courant (26).
